**Europäisches Patentamt**

**European Patent Office**

**Office européen des brevets**

(19)

(11)  **EP 1 608 170 A1**

(12)  **EUROPEAN PATENT APPLICATION**

(43)  Date of publication:
21.12.2005  Bulletin 2005/51

(51)  Int Cl.$^7$: **H04N 7/16**

(21)  Application number: **04291502.5**

(22)  Date of filing: **15.06.2004**

(84)  Designated Contracting States:
**AT BE BG CH CY CZ DE DK EE ES FI FR GB GR
HU IE IT LI LU MC NL PL PT RO SE SI SK TR**
Designated Extension States:
**AL HR LT LV MK**

(71)  Applicant: **Thomson Licensing
92100 Boulogne Billancourt (FR)**

(72)  Inventors:
• **Schmouker, Philippe
35830 Betton (FR)**

• **Grasland, Izabella
35160 Breteil (FR)**
• **Csicsatka, Tibor
CA 92025 Escondido (US)**
• **Massey, Matthew
Hong-Kong (US)**

(74)  Representative: **Fréchède, Michel et al
Cabinet Lavoix
2 Place d'Estienne d'Orves
75441 Paris Cedex 09 (FR)**

(54)  **Method and system for setting user preferences and user profile**

(57)  The method of establishing a user profile and preference for users selecting at least one content element among a plurality of content elements in a particular set of content elements belonging to a plurality of content sets, where the particular set is grouped together by similar characteristics. The method comprises ordering the plurality of content elements being presented in an order of reproduction, browsing each of the content elements in the particular set, from one set to another set, for the user to analyze a sampling of the content element for each of the particular set of content elements, selecting a desirable content element from the available plurality of content elements, and after selecting the desirable content element, indicating a preference level for the selected content element by inputting a preference score, where successive input actions by the user defines successive preference levels for the selected content element, and storing the information of the preference level associated with each selected content element in a user profile module.

FIG.1

EP 1 608 170 A1

**Description**

FIELD OF THE INVENTION

The present invention relates to methods and systems for setting user preferences and user profile.

BACKGROUND OF THE INVENTION

As the number of information and content available to users has increased, along with the diversity of the content available such as text, music, video programming, and other multimedia rich content, it has become increasingly challenging for users to identify, order and sort contents of interest. Historically, users have identified contents of interest by analyzing printed guides, text, and other tried and true methods such as a written checklist. Typically, such conventional printed guides can list and sort the contents by some order such as time, date, and title.

More recently, such content lists or guides have become available in an electronic format, for example, electronic program guides (EPGs) for television. Like printed television program guides, EPGs can be like a digital cable program guide containing grids listing the available television programs by time and date, channel and title. Some EPGS, however, allow television users or viewers to sort or search the available television programs in accordance with personalized preferences such as genre. In addition, EPGs allow for on-screen presentation of the available television programs by presenting on the grid upcoming programs and programs on other services. Because a cable EPG, for instance, lists all programs carried by a cable company in one place, the user can also see what is being played on competing services.

Even though EPGs allow users to identify desirable programs more efficiently than conventional printed guides, they still suffer from a number of limitations. For example, many viewers have a particular preference towards, or bias against, certain types of contents, such as cooking shows or news channels. Thus, in this example, the user preferences can be applied to the EPG to obtain a set of recommended programs that may be of interest to a particular user.

Thus, a number of tools have been proposed or suggested for recommending specific content.

The TiVo® system, for example, commercially available from Tivo, Inc., of Sunnyvale, Calif., USA, allows users to rate shows using a "Thumbs Up and Thumbs Down" feature. Using this ancient rating system of approval and disapproval, the user can indicate programs that the person likes and dislikes, respectively. Consequently, the TiVo® receiver matches the recorded user preferences with received program data, such as an EPG, to make recommendations custom made for each particular user.

Therefore, such tools for recommending content provide selections of programs that a user might like. However, even with the aid of such tailored content or program suggestions, however, it is still difficult for a user to identify content of interest from among all the options.

A need therefore exists for a method and system for setting user preferences and user profile in a more efficient manner. A further need exists for a method and system for setting user preferences and user profile for a large number of content sets in a manner that permits a user to efficiently optimize the contents to identify the best contents of interest. In short, as the number and complexity of content has increased, it has become increasingly difficult and cumbersome to effectively identify, order, and reproduce many desirable contents for a particular user.

SUMMARY OF THE INVENTION

Accordingly, it is an object of the invention to provide a more reliable and efficient method for establishing a user profile and preference.

With the foregoing and other objects in view, there is provided in accordance with the invention, a method of establishing a user profile and preference for users selecting at least one content element in a particular set of content elements that belong to a number of different sets, where this set is grouped together by similar characteristics. The method includes ordering the content elements being presented in an order of reproduction, browsing each of the content elements in the set, from one set to another set, for the user to analyze a sampling of the content element for each set of content elements, selecting a desirable content element from the content elements, after selecting the desirable content element, indicating a preference level for the selected content element by inputting a preference score, where the user successive acts to input in order to define successive preference levels for the selected content element, and storing the information of the preference level associated with each selected content element in a user profile module.

Moreover, there is also provided, a system for establishing a user profile and preference for users selecting at least one content element among a plurality of content elements in a particular set of content elements belonging to a plurality of content sets. The particular set is grouped together by similar characteristics, including an input device. The system includes a user profile module for storing the information of the preference level associated with each selected content element based on preferences of a user of the system; a memory for storing computer readable code; and a processor operatively coupled to said memory and said a user profile module, where the processor is configured to order the plurality of content elements being presented in an order of reproduction; browse each of the content elements in the particular set from one set to another set for the user to analyze a sampling of the content element for each of the particular set of content elements; select a desirable content element from the available plurality of content elements; and indicate a preference level for the selected content element by calculating a preference score, where the input device is adapted to receive successive input actions by the user defining successive preference levels for the selected content element.

These and other aspects of the invention will be apparent from the following description, drawings and claims.

BRIEF DESCRIPTION OF THE DRAWINGS

Figure 1 is a block diagram showing a system for setting user preferences and profile according to the present invention.

Figure 2 is an example of a reproducing equipment of the system of figure 1.

Figure 3 is a flow chart showing a process for setting user preferences and profile.

Figure 4 is a schematic data structure corresponding to a content element according to the present invention.

DETAILED DESCRIPTION

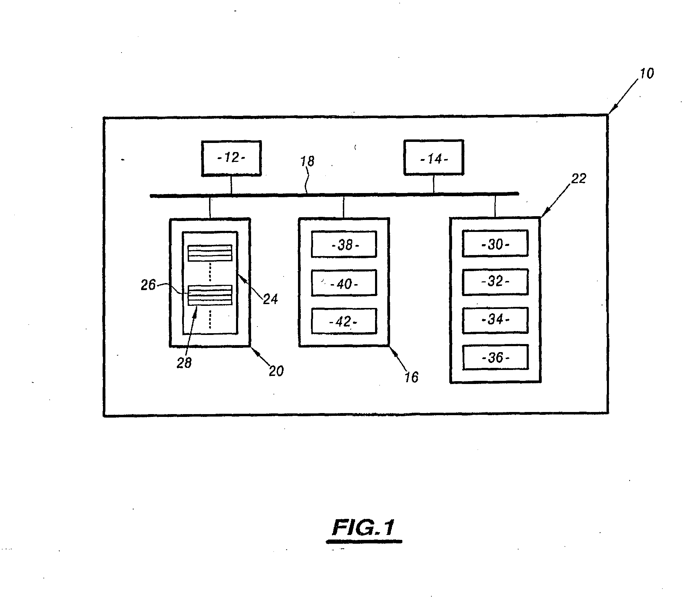

Referring to Figure 1, a system 10 for setting user preferences and profile is shown. The system 10 includes a processing control section 12 such as a microcomputer. The processing control section 12 is connected to an electronic memory 14. The processing control section 12 performs data processing functions by referring to the electronic memory 14 according to user input operations, etc., and delivers the processed data to a reproducing equipment 16. The electronic memory 14 includes, e.g., a ROM and stores various data related to the mode of operation of the system 10. The processing control section 12 and the electronic memory 14 are connected via a bus 18. In the system 10, the bus 18 also connects the processing control section 12 and the electronic memory 14 to a data storage section 20 and a data setting module 22.

The data storage section 20 is a permanent storage system. The data storage section 20 may also be a slot for a semiconductor removable media such as SmartMedia™ Memory Card, a removeable flash memory card that can be used in several different types of digital devices including digital music players and the like.

Compressed digital audio data or playlists, for example, are stored in such removable media in the form of a content files section 24. The content files section 24 is made of content elements 26, which are, in turn, grouped into various predefined content sets 28 according to a specific criteria. In the present example, content elements 26 may be organized by a particular user's preference or a predetermined criteria. Such a predetermined criteria may have been previously processed by extracting objective and non-perceptual characteristics from the content elements, e.g., signal processing applied on audio data files. Furthermore, content elements 26 are audio data files recorded on the data storage section 20 in a compressed format according to, e.g., an MP3 audio format, that is, MPEG1 Layer III audio format.

In the domain of music, for instance, content elements 26 that include symphony music files may be grouped into a classical music set, and so forth. In fact, all stored content elements 26 can be grouped together by predefined similarities within sets 28. Thus, thousands of music files may be grouped by a mere dozen of sets.

The data setting module 22 includes a new content element adding module 30, a navigational module 32, a set selection module 34, and a preference setting module 36. The data setting module 22 has the function of interpreting the commands of algorithms stored in the electronic memory 14 and classifying, for example, the content elements 26 within the content sets 28 according to a classification algorithm.

The reproducing equipment 16 will now be described in greater detail.

The reproducing equipment 16 of the system 10 may be, for example, a digital audio reproducing equipment. The equipment 16 has been integrated into the system 10 as shown in figure 1, linked to the processing control section 12 and the electronic memory 14. However, it is envisioned as well that the reproducing equipment 16 may be an add-on feature and physically detached from the processing control section 12 and the electronic memory 14. Specifically, the reproducing equipment 16 includes a display indicator section 38, a user interface 40, and an output section 42.

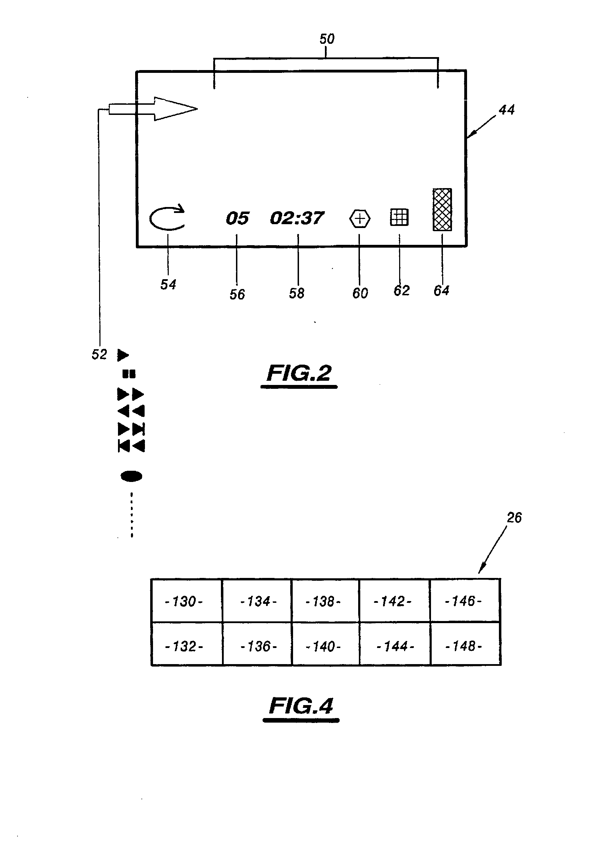

As shown in figure 1, the display indicator section 38, user interface 40, and the output section 42 of the reproducing equipment 16 are illustrated in greater depth in an example of an external digital audio reproducing apparatus 44. Referring now to figure 2, the reproducing apparatus 44 includes an area 50 denoting a title or operation type display area, an operation mode display 52, a play mode display 54, a current tune or music number display 56, and a current music play time display 58. In addition, the user interface 40 of figure 1 includes a preference setting indicator 60, a teaser play mode indicator 62, and a user profile setting indicator 64.

Furthermore, the output section 42 has audio outlets to play songs and signal the user inputs with regards to all the user interface 40 indicators selected. In particular, the output section 42 may play songs and display data associated with the reproduced content element 26, as well as indicate the level of preference already belonging to a content element 26 or the level being currently set for a content element 26. Two means, among others, can be used to indicate the level of preference of users. First, an integer or a growing gauge can be printed or displayed on the operation mode display 52 of the reproducing apparatus 44 which corresponds to the range of the different preference levels. Second, a distinct auditory sound signal may be played. For example, different sounds may indicate different levels of preference, or alternatively, the same sound can be used such as an applause or whistle like sounds, with different level of pitches with increasing pitch sounds used for successive higher levels of preference chosen by the user. Therefore, the louder the sound, the higher the level of preference.

In the title or type of operation display area 50, if the mode is set at "TITLE," then the titles of the songs, etc. are scrolled for viewing and selection by the user. If the mode is set at "OPERATION," then, for example, the volume level of the reproducing apparatus 44 will be graphically displayed. Different types of operational settings may be displayed other than volume, such as for example, the level of battery power, or a preference level transmitted to the user in a corresponding encoded integer value for a preference level of a particular song corresponding to the range of the different preference levels and the like.

For the operation mode display 52, several symbols are shown such as "PLAY", "PAUSE", "FAST FORWARD", "FAST BACKWARD", "SELECT NEXT PLAYLIST", "SELECT PREVIOUS PLAYLIST", "PLAY TEASER," and others. These different symbols are successively displayed according to the operations available.

The content elements 26 here, namely, the songs, are chosen by the setting of a play screen mode. For the play mode display 54, several modes can be chosen among "REPEAT ALL CONTENT ELEMENTS IN ORDER", "REPEAT 1", "REPEAT PlayList", "PLAY ONCE", "RANDOM PlayList", "RANDOM ALL", and etc. In "REPEAT ALL", reproduction is repeated in the order of the built-in data storage section 20. In "REPEAT 1", only one tune or song is repeated. In "REPEAT PlayList", all tunes on a selected set or playlist are repeated in a preferential order of songs. In "PLAY ONCE", all tunes in the built-in data storage section 20 and memory card are once played in order. In "RANDOM PlayList", all tunes on a selected playlist are played at random. In "RANDOM ALL", all tunes in data storage section 20 are played at random.

The current tune or music number display 56 and the current music play time display 58 indicate the order of a particular song in relation to the other songs in a particular set and the length of time of the current song, respectively.

We now turn to the particulars of the user interface 40 of figure 1. In the preference setting indicator 60, this indicator 60 registers and confirms the preference of the user. The preference setting indicator 60 can be a key, for instance, labelled "I LIKE IT". In this example, if the user likes a particular song, by pressing the preference setting indicator 60, the user validates to the data storage section 20 and the processing control section 12 of system 10 that this particular song must be ordered in the user's profile set with a preferential level. This information is then used by the system 10 to re-order and sort the content elements 26, i.e., music files, in a preferential manner so that users may have their favourite songs reproduced in a desired order by re-ordering them in a preferential list or order among a large number of songs within the content files section 24.

In fact, each time the user finds one of the reproduced content elements 26 attractive, he can signify it to the system by pressing preference setting indicator 60, i.e., the "I LIKE IT " key. The system 10 then records the pressings count on this key, taking into account either a maximal delay (e.g. few seconds) or the repetitiveness of the intervals between two successive pressings until this delay is not greater than a prefixed limit, e.g., few seconds. This pulse or pressing count is associated with the content element 26 being reproduced and is stored within the data storage section 20. The pulse or pressing count is understood by the system 10 as the level of preference of this content element 26 by the user. In short, the higher the counts of the pulses or pressings, the higher the preference level and score of the content element 26 is.

Therefore, when the user especially likes a particular song, he confirms by pressing the preference setting indicator several times successively. This in turn indicates to the data setting module 22, in particular, to the preference setting module 36, and processing control section 12 and the data storage section 20, a re-ordering of the playlist or content elements 26 in a set 28. Or alternatively, a new user profile may be generated by creating a new playlist or set 28. To this end, the user profile setting indicator 64 may be used.

And in order to reset the preference level of a particular song, the preference setting indicator 60 may be pressed for a number of seconds to delete the previously stored preference levels.

The teaser play mode indicator 62 of the user interface 40 allows a user to listen to a sampling of the songs belonging to a particular set. Consequently, a set may be quickly listened to in part so that the user can identify the songs he would like to select for listening in its entirety. In fact, rather than just having the beginning of the song played as is usual, a song may be played in part in sections for quicker identification of the songs because users can better identify songs that they are already familiar by listening to the most characteristic portions or middle sections of a song.

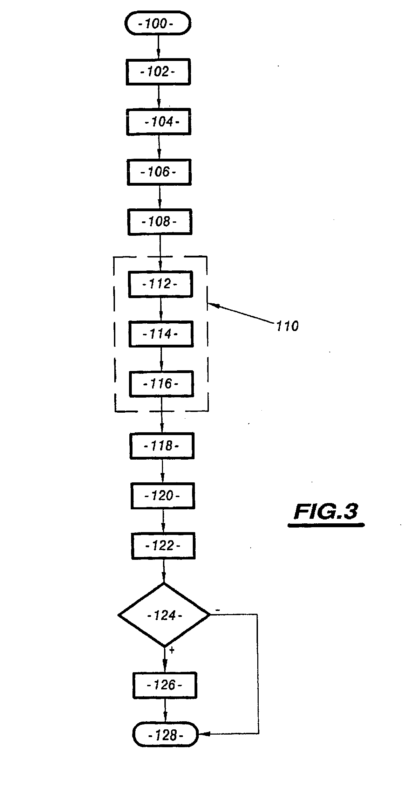

Referring to figure 3, a flow chart showing a process 100 for setting user preferences and profile is shown. In a step 102, the content elements 26, i.e., music files, are ordered and sorted. The order sequence may be in successive order or random order of reproduction. The order of content elements 26 may be further sorted into sets 28. In a step 104 using the navigational module 32, the user browses each of the content elements 26, from one set 28 to another set 28, for the user to analyze a sampling of the content element for each of the particular set of content elements. Then, in a step 106, the user listens to a characteristic portion of a song and decides whether he would like to continue to listen to this set or playlist, or song, or to skip to a next or previous set, or song, respectively.

Thereafter, in a step 108, the user selects a desirable content element 26 from the available content elements 26 in the set 28. After making the selection of the desirable song or tune, the user then sets a preference level in a step 110. The step 110 collectively includes steps 112, 114 and 116. In the step 112, the user indicates the preference level of a content element 26 by inputting a preference score. This preference score is linked to successive input actions by the user by pressing, for instance, the preference setting indicator 60, which defines the successive preference levels for the selected content element 26. Thus, in the step 114, the user presses the preference setting indicator 60. In the step 116, how many times and how long the user has pressed the preference setting indicator 60 corresponds directly to the preference level chosen by the user with regards to the selected content element 26.

Once the user preference setting has been chosen in the foregoing step 110, the preference score is stored in a step 118 in the data storage section 20. In other words, all the information pertaining to the preference level and score associated with the each of the selected content elements in a user profile is stored in the step 118. Subsequently, in a step 120, the content elements are now re-ordered to take into account the user preferences levels. Now, the reproducing order will be based on the user preferences determined above in the step 110.

Thereafter, in a step 122, the display indicating the preference level either by a sound tone or otherwise is activated in the display indicator section 38 of figure 1.

Subsequently, the process 100 also permits the addition of new content elements 26 to existing sets 28 or the generation of brand new sets 28 containing new content elements 26 using the new content element adding module 30. If a new content element is added to a set in a step 124, the order of the playlist or set 28 is re-ordered so that the newly added content element is placed in a first position in the order of reproduction in a step 126. If no new content elements are to be added, then process 100 ends in a final step 128.

In the step 126, when reproducing the content elements of set 28 for the user, the content elements 26 are now reproduced with an order which has taken into account the settings of the user's preferences. This reproducing order is based on a priority function processed by the system 10. Many priority functions can be used. For example, an algorithm for determining the order of content elements is described below.

For $n_i$ preference level of the i-th element 26 in a considered set 28, which is the last pressing or pulse count given by the user for this element, one of the following functions is used to semi-randomly determine the played element 26. Each step proposes, just as examples of random functions, three different functions with three different results on the order elements that will be played:

1. every content element is sorted in a decreasing order of their preference levels, and the "most preferred" elements are first reproduced in a prefixed or random order for elements with the same rank; or

2. for N, the sum of all the $n_i$ associated to the content elements not yet reproduced, e.g., $p_i$ is the probability that element i will be reproduced : $P_i = n_i / N$. The reproducing order is random based on this probability of reproducing. This function plays mostly first preferred elements within sets which are not very populated; or

3. for X, the sum of all the $x_i$ associated to the content element not yet reproduced, and for k any coefficient equal to 2 or more, $p_i$ is the probability of reproducing the i-th element and is defined as:

$$p_i = x_i / X \text{ with } x_i = f(n_i)$$

where $f(n_i)$ can be, for example :

$$f(n_i) = n_i^k \text{ with } k \geq 2,$$

or $f(n_i) = \exp(k \times n_i)$ with $k \geq 1$, etc.
The reproducing order is random, based on this probability of reproducing. This function plays mostly first preferred elements within sets which are very populated.

In this algorithm, the first proposed function rules that the most reproduced set will always be proposed first, that the second most proposed one will always be proposed thereafter, and so forth. For example, when two of the elements 26 have the same rank, it is proposed to sub-rank them with a random function or without.

The second proposed function rules that the preferred elements 26 will be mainly proposed first when not too many elements 26 are available in the corresponding set 28, while such preferred elements 26 will not be often proposed first when a large number of elements 26 are available in the corresponding set 28. The reason for this is that the probability of an element 26 to be proposed first is a perfect linear function of its preference level. In other words, when not too many elements 26 are available in a set 28, the most preferred elements 26 will have a greater probability to be played first.

The third proposed function rules that the preferred elements 26 will be mainly proposed first when many elements 26 are available, and that they will have a higher probability to be played first when not too many elements 26 are available in the corresponding set 28. The reason for this is that here the probability of being played is an exponential function of the preferred level of each element 26, and not a linear one.

Any newly inserted content element first receives a null level of preference. As soon as this content element is reproduced, its level of preference evolves if the user presses the preference setting indicator 60, the "I LIKE IT" key. If during subsequent reproductions of this same content element, the user changes his mind and wants to change the preference level, he can vary this preference level according to new pressings or pulse counts, by further pressing the preference setting indicator 60, or by resetting the preference level and re-inputting a new preference score.

Therefore, the user can reset the preference level of a content element by maintaining the preference setting indicator 60 either by depressing the indicator 60 for a longer time until the preference level is indicated to have been resetted, by pressing some "reset" key, or by selecting a reset item in a given menu, should the information on a content element be displayed while the content element is reproduced.

Clearly, the data pertaining to preference levels for all the content elements can be associated for each content element to a database corresponding to a particular user, such as that user's personal user profile. This would be ideal in situations where the reproducing equipment is accessed by many users, as for example, in a communal lounge hi-fi reproduction room. This is the object of THOMSON patent disclosure IF030291/PF040041 of Philippe Schmouker et al. entitled, "Method and Apparatus for user preferred reproducing a document out of a plurality of documents".

Referring now to figure 4, a schematic representing a data structure corresponding to a content element 26 according to the present invention is shown.

In order to create a unique user profile, the content element 26 contains a preference score field 130. The preference score field 130 is defined by the number of successive pulses count or pressings of the preference setting indicator 60, associated with the considered content element 26. The preference score 130 field is defined by a coding 132 of, for example, 6 bits of data that provides a 64 score scale. In other words, the user, by depressing the unique "I LIKE IT" key, he encodes his preference score on p bits, providing preference levels having a range of up to $2^p$ different preference levels.

In the content element 26, a data field 134 indicates a Boolean value 136 of a one-bit data. This Boolean value 136 indicates that a content element 26 has been inserted, thus it has been categorized as belonging to a set 28, but that this content element has not yet been reproduced. This information may be used while reproducing the content elements 26 within a particular set, reproducing first the very newly added elements. Thus, the Boolean value 134 directs the reproducing equipment to play the newly added element first.

In the data field 138, another Boolean value 140 is defined by a one-bit data field. This Boolean value 140 is set to true unless a content element 26 has been reproduced, or as soon as all the elements contained within a set have been reproduced. This information is used to select the content elements of a set one after the other, possibly after the processing of an ordering algorithm. This value 140 is set to true while the content element has not yet been reproduced, and it is set to false as soon as it has been reproduced. Thereafter, the value 140 can be reset to true as soon as all elements contained in the same set have been reproduced. Because 1 bit of data is sufficient for coding a Boolean value, the data 136 and 140 can be coded within a single byte. They can be coded into a single byte with data 132 as long as data 132 is coded on not more than 6 bits.

The next data field 142 holds a set identifier. This is the set identifier containing the considered content element 26. The system 10 maintains a list of the playlists or sets 28. The list identified by the set identifier is linked to a classification algorithm for the content elements. The set identifier is coded within 8 bits of data as illustrated in field 144. This permits the definition of 256 sets. An alternative way of coding is to use a memory address coded within 32 bits or more. This address could be the base address of a set descriptor.

The last data field 146 is the element identifier which is the identifier of the considered content element 26. This identifier is a unique memory address coded within 16, 32, 64 or 128 bits of data, for example, or an index within a list of elements, as indicated in a field 148.

Should a content element 26 belong to more than one set 28, for each association set 28, element 26 the data storage section 20 will contain as many data structures as needed for the same content element 26. Each of these data structures will be clearly distinguished by the values (set identifier 142, element identifier 148).

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. A method of establishing a user profile and preference for users selecting at least one content element among a plurality of content elements in a particular set of content elements belonging to a plurality of content sets, wherein said particular set is grouped together by similar characteristics, said method comprising:

   - ordering the plurality of content elements being presented in an order of reproduction;
   - browsing each of the content elements in the particular set, from one set to another set, for the user to analyze a sampling of the content element for each of the particular set of content elements;
   - selecting a desirable content element from the available plurality of content elements;
   - after selecting the desirable content element, indicating a preference level for the selected content element by inputting a preference score, wherein successive input actions by the user defines successive preference levels for the selected content element; and
   - storing the information of the preference level associated with each selected content element in a user profile module.

2. The method of claim 1, wherein the method further comprises:

   - submitting an additional content element into said particular set of content elements or in a newly created set of content elements; and
   - ordering said additional content element in a first position in said order of reproduction.

3. The method of claim 2, wherein the successive input actions to indicate a preference for the selected content element comprises successively depressing a predetermined unique key in an adapted device, the key associated with said preference score signifying a positive preference directed towards said selected content element of said particular set of content elements.

4. The method of claim 3, wherein storing the information in the user profile module comprises optimizing the selection of the desirable content element by personalizing for a particular user, the order of said plurality of content elements presented in said order of reproduction.

5. The method according to claims 3 or 4, wherein depressing the predetermined unique key encodes said preference level on p bits, providing a plurality of preference levels comprising a range of $2^p$ different preference levels.

6. The method according to claims 3 through 5, wherein the preference score is defined as a function of the time duration of depressing said predetermined unique key and/or a number of elementary pulses generated due to said repetitive input action by the user during a predetermined time duration.

7. The method according to claims 5 and 6, wherein said preference level is transmitted to the user by displaying a corresponding encoded integer value or by playing distinct auditory signals corresponding to the range of the different preference levels.

8. The method according to any of the preceding claims, wherein said content element comprises an element already belonging to the particular set of content elements or newly inserted into an already existing set or inserted into a newly created set, and wherein said method further comprises encoding in an one-bit data as a Boolean value indicating that said content element has been categorized a newly inserted element but not yet reproduced and said Boolean value reproducing newly added content elements in a first order.

9. The method of claim 1, wherein the method further comprises encoding in an one-bit data a Boolean value for selecting said order of the content elements to be reproduced, and for determining whether the content element has been reproduced, and wherein the Boolean value sets to true if the content element has not yet been reproduced and sets to false if the content element has already been reproduced.

10. A system, for establishing a user profile and preference for users selecting at least one content element among a plurality of content elements in a particular set of content elements belonging to a plurality of content sets, wherein said particular set is grouped together by similar characteristics, including an input device, wherein the system further comprises:

    a user profile module for storing the information of the preference level associated with each selected content element based on preferences of a user of the system;
    a memory for storing computer readable code; and
    a processor operatively coupled to said memory and said user profile module, said processor configured to:

    - order the plurality of content elements being presented in an order of reproduction;

- browse each of the content elements in the particular set, from one set to another set, for the user to analyze a sampling of the content element for each of the particular set of content elements;
- select a desirable content element from the available plurality of content elements; and
- indicate a preference level for the selected content element by calculating a preference score, wherein the input device is adapted to receive successive input actions by the user defining successive preference levels for the selected content element.

**11.** The system of claim 10, wherein the processor is further configured to:

- submit an additional content element into said particular set of content elements or in a newly created set of content elements; and
- order said additional content element in a first position in said order of reproduction.

**12.** The system of claim 11, wherein the system further comprises a predetermined unique key provided in the input device, said key adapted to be successively pressed by the user and associated with said preference score signifying a positive preference directed towards said selected content element of said particular set of content elements.

**13.** The system according to any one of the preceding claims, wherein the processor is further configured to transmit to the user said preference level and to display a corresponding encoded integer value or to play distinct auditory signals corresponding to the range of the different preference levels.

FIG.1

50

44

05    02:37    ⬡    ▦    ▨

54    56    58    60    62    64

52

**_FIG.2_**

26

| -130- | -134- | -138- | -142- | -146- |
|-------|-------|-------|-------|-------|
| -132- | -136- | -140- | -144- | -148- |

**_FIG.4_**

FIG.3

**European Patent Office**

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | SHARON CRAWFORD: "Using Windows Media Player 9 Series" INTERNET ARTICLE, [Online] 9 December 2002 (2002-12-09), XP002345576 Retrieved from the Internet: URL:http://www.microsoft.com/windowsxp/usi ng/windowsmediaplayer/expert/crawford_02de cember09.mspx> [retrieved on 2005-09-16] Page 4, chapter "Create Auto Playlists", first paragraph ----- | 1-4,7, 10-13 | H04N7/16 |
| A | EP 1 263 224 A (DENTSU INC; SUMITOMO CORPORATION) 4 December 2002 (2002-12-04) * paragraph [0164] * * paragraph [0166] * ----- | 1,3,6,7, 10-13 | |
| A | WO 00/58967 A (TIVO, INC) 5 October 2000 (2000-10-05) * page 28, line 1 - line 11 * * page 30, line 32 - page 31, line 6 * ----- | 1-3,6,7, 10-13 | |
| | | | **TECHNICAL FIELDS SEARCHED (Int.Cl.7)** |
| | | | H04N |

The present search report has been drawn up for all claims

| Place of search | Date of completion of the search | Examiner |
|---|---|---|
| The Hague | 20 September 2005 | Dockhorn, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

        ................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 29 1502

This annex lists the patent family members relating to the patent documents cited in the above-mentioned European search report.
The members are as contained in the European Patent Office EDP file on
The European Patent Office is in no way liable for these particulars which are merely given for the purpose of information.

20-09-2005

| Patent document cited in search report | | Publication date | Patent family member(s) | | Publication date |
|---|---|---|---|---|---|
| EP 1263224 | A | 04-12-2002 | AU | 3329700 A | 12-09-2001 |
| | | | CN | 1451233 A | 22-10-2003 |
| | | | WO | 0165842 A1 | 07-09-2001 |
| | | | JP | 3348067 B2 | 20-11-2002 |
| | | | JP | 2001242842 A | 07-09-2001 |
| | | | TW | 543325 B | 21-07-2003 |
| WO 0058967 | A | 05-10-2000 | AU | 4185800 A | 16-10-2000 |
| | | | CN | 1353851 A | 12-06-2002 |
| | | | EP | 1166269 A1 | 02-01-2002 |
| | | | US | 6868225 B1 | 15-03-2005 |

EPO FORM P0459

For more details about this annex : see Official Journal of the European Patent Office, No. 12/82